# EUROPÄISCHE PATENTSCHRIFT

(11) **EP 1 609 031 B1**
(45) Veröffentlichungstag und Bekanntmachung des Hinweises auf die Patenterteilung: **23.01.2008**
(21) Anmeldenummer: 04724593.1
(22) Anmeldetag: 31.03.2004
(51) Int. Cl.: G05B 19/042

(54) **Feldgerät zur Vorausbestimmung eines Messzeitpunktes**
Field device for determining in advance the point in time of a measurement
Dispositif de terrain pouvant déterminer par avance l'instant d'une mesure à prendre

(30) Priorität: 02.04.2003 DE 10315164
(43) Veröffentlichungstag der Anmeldung: 28.12.2005
(73) Patentinhaber: Endress + Hauser GmbH + Co. KG, 79689 Maulburg (DE)
(72) Erfinder: KILIAN, Markus, 79100 Freiburg (DE)
(74) Vertreter: Andres, Angelika Maria
(86) Internationale Anmeldenummer: PCT/EP2004/003408
(87) Internationale Veröffentlichungsnummer: WO 2004/088441

(56) Entgegenhaltungen:
- EP-A- 0 973 297
- DE-A1- 10 020 253
- DE-A1- 10 133 962

## Beschreibung

Die Erfindung bezieht sich auf ein Feldgerät der Prozessautomatisierungstechnik, wobei das Feldgerät seine Messwerte zu bestimmten Kommunikationszeitpunkten (t_{K}) über einen Feldbus nach einer Anfrage von einer zentralen Steuereinheit bezüglich seiner Messwerte kommuniziert. Bei dem Feldgerät handelt es sich beispielsweise um ein Füllstandmessgerät. Bei den Messwerten handelt es sich beispielsweise um den Füllstand, den Druck, die Viskosität, die Dichte oder um den pH-Wert eines Mediums. Bei dem Feldbus handelt es sich beispielsweise um einen Profibus®.

Von der Anmelderin werden Feldgeräte/Messgeräte z.B. zur Messung und/oder Überwachung des Füllstandes eines Mediums in einem Behälter produziert und vertrieben. Diese. Messgeräte liefern ihre Messwerte oder allgemein die chemischen oder physikalischen Prozessgrößen zur Weiterverarbeitung meist an einen Feldbus. Angestrebt wird, dass die Messdaten möglichst aktuell sind, also den aktuellen Zustand des Mediums wiederspiegeln. Dies ist vor allem dann relevant, wenn die Frequenz der Abfragen oder Anfragen in der Größenordnung der möglichen Messfrequenz liegt. Daher sollten die Messdaten erst kurz vor der Kommunikation erzeugt werden. Hierfür muss jedoch bekannt sein, wann die Anfrage durch den Feldbus stattfinden wird. Dieser Zeitpunkt hängt z.B. davon ab, wie viele Messgeräte mit dem Feldbus verbunden sind. Wird die Anzahl der Messgeräte erhöht, so wird der zeitliche Abstand zwischen den Anfragen größer. Es kann auch die Konfiguration des gesamten Systems geändert werden, so dass die Abstände variieren. Es gibt also keine fest vorgegebenen Zeitabstände.

Dieses Problem ist besonders dann gegeben, wenn über den Feldbus von einer zentralen Steuereinheit die Anfrage kommt und wenn die Feldgeräte nicht selbständig ihre Daten kommunizieren oder zumindest vom übrigen Geschehen auf und um den Feldbus herum wissen. Finden die Anfragen in so großen Zeitabständen statt, dass in der Zwischenzeit mehrere Messungen möglich sind, so kann auch angestrebt werden, den Energieverbrauch zu reduzieren, indem keine unnötigen, da nicht abgefragten Messungen vollzogen werden.

Die Offenlegungsschrift DE 101 33 962 A1 beschreibt ein Verfahren zum Synchronisieren von Sensordaten, welche von Sensoren an eine Informationsplattform übermittelt werden. Die Sensoren befinden sich dabei in einem Kraftfahrzeug und erfassen Objekte im Umfeld des Fahrzeuges. Da die Sensoren asynchron und unabhängig voneinander arbeiten, werden die Sensordaten bzgl. der Messzeitpunkte auf gemeinsame Basiszeitpunkte umgerechnet.

Daher liegt der Erfindung die Aufgabe zugrunde, den Zeitpunkt einer Anfrage der zentralen Steuereinheit näherungsweise zu bestimmen, um dafür passend den Messwert zu erzeugen.

Die Aufgabe wird durch die Merkmale des Anspruchs 1 gelöst. Der Messzeitpunkt (t_{M}) sollte dabei möglichst kurz vor dem näherungsweise bestimmten Kommunikationszeitpunkt (t_{f}) und somit vor der Übermittlung des Messwertes liegen. Aus den vorherigen Kommunikationszeitpunkten wird also auf zukünftige Anfragen geschlossen, z.B. durch Mittelwertbildung der vorhergehenden Zeitpunkte. Das im erfindungsgemäßen Feldgerät umgesetzte Verfahren setzt also voraus, dass schon Anfragen stattgefunden haben; das Verfahren lässt sich also z.B. nicht für das Anlaufen eines Systems verwenden. Vorteilhaft bei dem Verfahren ist, nach möglichst jeder Kommunikation den folgenden Kommunikationszeitpunkt (t_{f}) mit dem direkt vorangegangenen Kommunikationszeitpunkt (t_{K}) näherungsweise zu bestimmen. Ändert sich beispielsweise die Anzahl der Messgeräte oder ändert sich etwas an der gesamten Konfiguration, so wird sich auch der Abstand zwischen den Anfragen ändern. Der Messzeitpunkt (t_{M}) muss dabei so bestimmt werden, dass der Abstand zum Kommunikationszeitpunkt (t_{f}) möglichst klein ist. Der Messzeitpunkt (t_{M}) sollte jedoch auch so liegen, dass der Messwert auch wirklich kommuniziert werden kann. Wenn also bekannt ist, dass die Erzeugung eines Messwerts unterschiedlich lange dauern kann, so ist dies zu berücksichtigen.
Zunächst wird also berechnet, dass z.B. zwischen zwei vorhergehenden Anfragen eine zeitliche Differenz von x Sekunden lag, d.h. A = |t'ₖ - tₖ| = x Sekunden. Dementsprechend ergibt sich der folgende Kommunikationszeitpunkt (t_{f}) als der Zeitpunkt der direkt vorhergehenden Anfrage (t"_{K}) zuzüglich x Sekunden. Dabei kann ein Zeitpunkt (t_{K}, t'_{K}) identisch sein mit dem Zeitpunkt (t"_{K}), von dem ausgehend der folgende Kommunikationszeitpunkt (t_{f}) näherungsweise bestimmt wird, d.h. t'_{K} = t"_{K}. Eine weitere Möglichkeit ist, den Zeitabstand (A) zwischen drei Anfragen zu bestimmen. Um den folgenden Kommunikationszeitpunkt (t_{f}) näherungsweise zu bestimmen, kann dieser Abstand (A) entweder zum Zeitpunkt der vorletzten Anfrage addiert werden oder der Abstand (A) wird durch 2 dividiert und zum Zeitpunkt der direkt vorhergehenden Anfrage (t"_{K}) addiert. Weitere Varianten der Mittelwertbildung sind möglich. Es kann z.B. auch nur ein zeitlicher Abstand für die näherungsweise Bestimmung des nächst folgenden Kommunikationszeitpunktes (t_{f}) verwendet werden.
Die Vorrichtung beinhaltet also eine Feldbuskommunikationseinheit - z.B. einen ASIC -, die Anfragen vom Feldbus entgegennimmt und feststellt, ob die Anfrage an das spezielle Feldgerät gerichtet ist. Die Ausgabe-/Steuereinheit, bei der es sich z.B. um einen entsprechenden Mikroprozessor handelt, bekommt die Kommunikationszeitpunkte (t_{K}) mitgeteilt und bestimmt näherungsweise davon ausgehend den folgenden Kommunikationszeitpunkt (t_{f}). Damit wird dann der Messzeitpunkt (t_{M}) bestimmt und die Messung passend ausgelöst.

Eine vorteilhafte Ausgestaltung sieht vor, dass mit dem Messwert auch der Messzeitpunkt (t_{M}) kommuniziert wird. Dies ist bei der Auswertung einer Zeitreihe wichtig, um die Messwerte in ihrem zeitlichen Verlauf einordnen zu können. Die Kommunikation des Messzeitpunktes (t_{M}) ist vor allem dann wichtig, wenn die Messzeitpunkte unterschiedliche Zeitabstände aufweisen.

Daher ermöglicht diese Kommunikation auch eine Zeitauswertung der Messwerte.

Eine vorteilhafte Ausgestaltung sieht vor, dass mindestens zwei zeitliche Abstände (A₁, A₂) zwischen jeweils mindestens zwei vorhergehenden Kommunikationszeitpunkten (t_{K1}, t'_{K1}, t_{K2}, t'_{K2}) berechnet werden, dass aus den zeitlichen Abständen (A₁, A₂) ein Mittelwert (M) gebildet wird, und dass der folgende Kommunikationszeitpunkt (t_{f}) ausgehend von dem Mittelwert (M) und einem vorhergehenden Kommunikationszeitpunkt (t"_{K}) näherungsweise bestimmt wird. Minimal müssen also drei Anfragen - d.h. beispielsweise t'_{K1} = t_{K2} - stattgefunden haben, so dass zwischen jeweils zwei Anfragen die zeitlichen Abstände (A₁, A₂) ermittelt und der Mittelwert (M) gebildet werden kann. Durch die Mittelwertbildung ergibt sich der Vorteil, dass kleinere Schwankungen der Zeitabstände herausfallen. Dabei ist bei der Anzahl der Werte, aus denen der Mittelwert gebildet wird, ein Optimum zu finden.

Eine vorteilhafte Ausgestaltung beinhaltet, dass in dem Fall, dass der zeitliche Abstand (A_{b}) bis zum näherungsweise bestimmten Kommunikationszeitpunkt (t_{f}) kleiner ist als ein Kleinstwert (K), der Kommunikationszeitpunkt (t_{f}) ausgehend von diesem Kleinstwert (K) näherungsweise bestimmt wird, wobei der Kleinstwert (K) aus dem minimalen zeitlichen Abstand (Aₘᵢₙ) bestimmt wird, der aufgrund technischer Gegebenheiten zwischen zwei aufeinander folgenden Messungen möglich ist. Es kann der Fall auftreten, dass die Anfragen zu schnell für das Feldgerät kommen. In diesem Fall muss auf die technischen Gegebenheiten des Feldgerätes eingegangen werden. Der Messtakt kann also nicht von der zentralen Steuereinheit vorgegeben werden, sondern wird vom Feldgerät selbst gesetzt.

Eine vorteilhafte Ausgestaltung sieht vor, dass in dem Fall, dass der zeitliche Abstand (A_{b}) bis zum näherungsweise bestimmten Kommunikationszeitpunkt (t_{f}) größer ist als ein Grenzwert (G), der Kommunikationszeitpunkt (t_{f}) ausgehend von dem zeitlichen Abstand (A'_{b}) näherungsweise bestimmt wird, der für die näherungsweise Bestimmung des vorhergehenden näherungsweise bestimmten Kommunikationszeitpunktes (t_{f}) verwendet wurde, wobei der Grenzwert (G) eine Grenze zwischen einem zeitlichen Abstand zwischen Anfragen in einem normalen Kommunikationszyklus und einem zeitlichen Abstand in einem gestörten Kommunikationszyklus der Steuereinheit darstellt. Ein Problem besteht darin, dass z.B. bei Feld/Messgeräten eine Parametrierung vorgenommen werden kann, dass also Parameter durch eine Parametriereinheit neu gesetzt werden. Solch ein Vorgang dauert meist deutlich länger als der Abstand zwischen normalen Anfragen durch die zentrale Steuereinheit. Wird eine solche Parametrierung an einem Messgerät vorgenommen, so kommt bei einem Feldgerät, das in der Reihenfolge der Anfrage diesem folgt, die Anfrage erst deutlich später an. Ein solcher Eingriff lässt sich nicht voraussehen, muss jedoch aus der Berechnung des folgenden Kommunikationszeitpunktes (t_{f}) herausgenommen werden, da nicht zu erwarten ist, dass auf einen Parametriervorgang ein weiterer folgen wird. Zu unterscheiden ist also zwischen einem normalen Kommunikationszyklus und einem z.B. durch eine Parametrierung gestörten Kommunikationszyklus. Ergibt sich also aus den Berechnungen ein zeitlicher Abstand (A_{b}), der größer als ein Grenzwert (G) ist, so ist in die Berechnung ein Zeitabstand eingeflossen, der sich möglicherweise aus einer Parametrierung oder einer anderen Störung des normalen Kommunikationszyklus' ergeben hat. Daher sollte nicht mit diesem Abstand (A_{b}) gerechnet werden, da sich ein Zeitpunkt ergibt, der mit hoher Wahrscheinlichkeit nach der realen Anfrage liegen würde. In der einfachsten Realisierung wird für die näherungsweise Bestimmung des nächsten Zeitpunktes auf den zeitlichen Abstand (A'_{b}) der vorherigen näherungsweisen Bestimmung zurückgegriffen. Es kann jedoch auch ein beliebig zu bestimmender Standardwert verwendet werden. Üblicherweise unterscheiden sich die Zeiten für Anfragen und für Parametrierung hinreichend, so dass z.B. eine statistische Auswertung einer Vielzahl von Zeitabständen zwischen Anfragen einen Grenzwert (G) ergibt. Dies sollte in einer Einstellung vor Ort oder durch eine Simulation des Systems geschehen. Eine andere Realisierung dieser Erkennung einer Störung des Kommunikationszyklus' ist, die Abweichung zwischen dem berechneten und dem aufgetretenen Kommunikationszeitpunkt auszuwerten und bei einer Abweichung, die wiederum größer als ein zu bestimmender Wert ist, die näherungsweise Bestimmung für den nächsten Kommunikationszeitpunkt passend zu modifizieren.

Die Erfindung wird anhand der nachfolgenden Zeichnungen näher erläutert. Es zeigt:
- Fig. 1:: ein Flussdiagramm für das im Feldgerät ablaufende Verfahren; und
- Fig. 2:: ein Blockschaltbild der Vorrichtung.

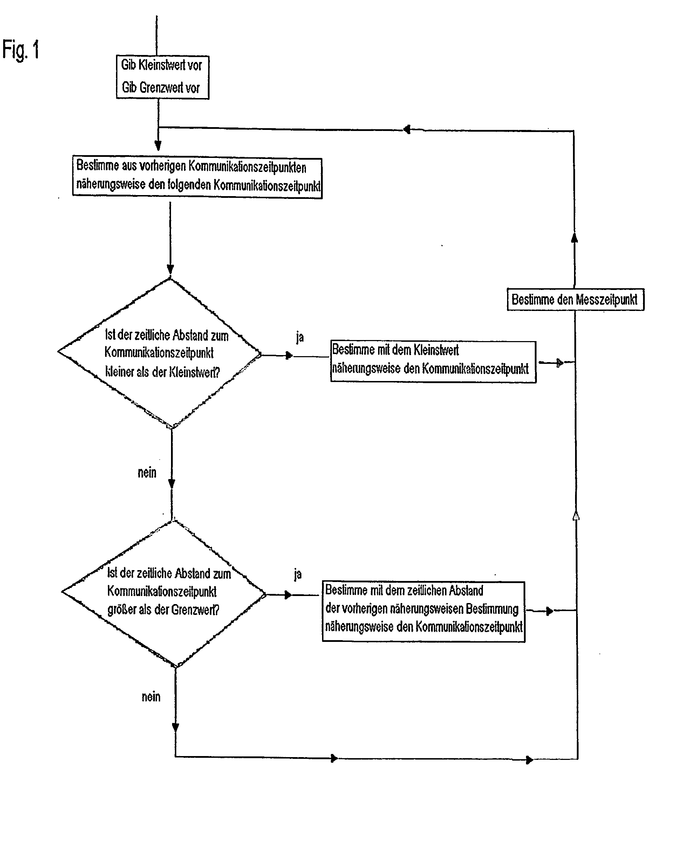

Fig. 1 zeigt schematisch den Ablauf des Verfahrens im erfindungsgemäßen Feldgerät. Der Kleinstwert K wird den technischen Gegebenheiten entnommen. Er gibt den minimalen zeitlichen Abstand an, der bedingt durch die Technik zwischen zwei Messungen liegen kann. Der Grenzwert G gibt die Grenze an, die zwischen einem Abstand zwischen Kommunikationszeitpunkten in einem normalen Kommunikationszyklus und einem Abstand in einem z.B. durch eine Parametrierung gestörten Kommunikationszyklus liegt. Die Dauer dieser

Abstände ist ausreichend verschieden, so dass der Grenzwert G z.B. durch eine statistische Auswertung einer Vielzahl von Kommunikationszeitpunkten bestimmt werden kann. Diese beiden Vergleichswerte K und G sind vor dem Beginn des eigentlichen Verfahrens vorzugeben. Aus vorherigen Kommunikationszeitpunkten wird dann jeweils der folgende Kommunikationszeitpunkt näherungsweise bestimmt. Dabei kann z.B. der Abstand zwischen mehreren Zeitpunkten bestimmt und entsprechend gemittelt werden. Ausgehend vom vorhergehenden, letzten Kommunikationszeitpunkt ergibt sich dann eine näherungsweise Bestimmung für den folgenden Zeitpunkt. Ist der Abstand zum nächsten Kommunikationszeitpunkt kleiner als der Kleinstwert K, so finden die Anfragen von der zentralen Steuereinheit schneller statt als dass die Prozessgrößen des Mediums, z.B. der Füllstand, gemessen werden können. Daher wird der folgende Kommunikationszeitpunktes t_{f} aus diesem Kleinstwert K berechnet, indem z.B. zum letzen Kommunikationszeitpunkt t_{K} der Kleinstwert hinzugerechnet wird. Ist der zeitliche Abstand kleiner als der Grenzwert G, so hat nur eine normale Anfrage stattgefunden und es handelt sich um einen ungestörten Kommunikationszyklus. Ist der zeitliche Abstand größer, so hat eine Störung z.B. in Form eines Parametriereingriffes stattgefunden. Direkte Folge der Verzögerung ist, dass das Feldgerät einen "veralteten" Messwert kommunizieren musste. Da nicht zu erwarten ist, dass anschließend wieder ein Eingriff stattfindet, ist es sinnvoller, den nächsten Kommunikationszeitpunkt t_{f} beispielsweise mit den Daten der vorherigen näherungsweisen Bestimmung näherungsweise zu bestimmen, indem z.B. der gleiche zeitliche Abstand verwendet wird. Nach der näherungsweisen Bestimmung des Kommunikationszeitpunktes t_{f} wird der optimale Messzeitpunkt t_{M} bestimmt, der möglichst kurz vor dem Kommunikationszeitpunkt t_{f} liegen sollte, um zu vermeiden, dass der Messwert "veraltet" ist. Gleichzeitig sollte der Messzeitpunkt t_{M} jedoch auch so liegen, dass der Messwert bei der Anfrage möglichst direkt kommuniziert werden kann, um keine Verzögerungen zu produzieren. Diese Bestimmung des Messzeitpunktes t_{M} hängt somit sehr stark von den intrinsischen Eigenschaften des Messgerätes ab. Ist dieser Messzeitpunkt t_{M} erreicht, so wird der Messwert erzeugt und nach der Anfrage vom Feldbus kommuniziert.

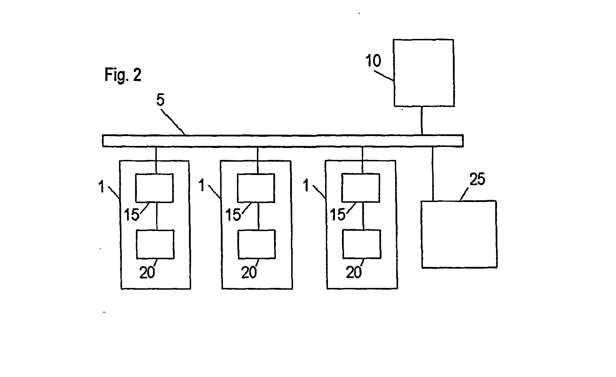

In Fig. 2 findet sich ein Blockschaltbild der Vorrichtung mit einem Feldbus 5, an dem in diesem Beispiel drei Feldgeräte 1 - beispielsweise ein Füllstandmessgerät -, eine zentrale Steuereinheit 10 - beispielsweise eine speicherprogrammierbare Steuerung, SPS - und eine Parametriereinheit 6 - beispielsweise ein Computer - angeschlossen sind. Die Feldgeräte 1 weisen eine Feldbuskommunikationseinheit 15 - z.B. ein ASIC - und eine Ausgabe-/Steuereinheit 20 - beispielsweise ein entsprechender Mikroprozessor - auf. Über die Parametriereinheit 25 lassen sich beispielsweise Parameter in den Feldgeräten 1 ändern. Die Ausgabe-/Steuereinheit 20 ist so beschaffen, dass sie aufgrund der vorhergehenden Kommunikationszeitpunkte, über die sie von der Feldbuskommunikationseinheit 15 Kenntnis erhält, den Zeitpunkt der Messung festsetzt.

### Bezugszeichenliste

- 1: Feldgerät
- 5: Feldbus
- 10: Steuereinheit
- 15: Feldbuskommunikationseinheit
- 20: Ausgabe-/Steuereinheit
- 25: Parametriereinheit

## Patentansprüche

1. Feldgerät (1) der Prozessautomatisierungstechnik, welches zu einem Messzeitpunkt (t_{M}) einen Messwert erzeugt,
**dadurch gekennzeichnet,**
**dass** mindestens eine Feldbuskommunikationseinheit (15) vorgesehen ist, die bei einer Anfrage von einer zentralen Steuereinheit (10) mindestens den Messwert zu einem Kommunikationszeitpunkt (t_{K}) als Antwort auf die Anfrage kommuniziert,
wobei die Zeitpunkte der Anfragen von der zentralen Steuereinheit (10) bestimmt sind,
und
**dass** mindestens eine Ausgabe-/Steuereinheit (20) vorgesehen ist, welche aus mindestens einem zeitlichen Abstand (A) zwischen mindestens zwei vorhergehenden Kommunikationszeitpunkten (t_{K}, t'_{K}) und einem vorhergehenden Kommunikationszeitpunkt (t"_{K}) den folgenden Kommunikationszeitpunkt (t_{f}) im Voraus bestimmt, an welchem als Antwort auf die nächste von der zentralen Steuereinheit (10) stammende Anfrage die Feldbuskommunikationseinheit (15) den zu erzeugenden Messwert kommuniziert,
welche aufgrund des bestimmten folgenden Kommunikationszeitpunktes (t_{f}) einen Messzeitpunkt (t_{M}) für die Erzeugung des Messwertes bestimmt,
und
welche den Messzeitpunkt (t_{M}) des Feldgerätes (1) steuert,
wobei die Feldbuskommunikationseinheit (15) mindestens den Kommunikationszeitpunkt (t_{K}), an welchem die Feldbuskommunikationseinheit (15) nach der Anfrage von der zentralen Steuereinheit (10) den Messwert tatsächlich kommuniziert, an die Ausgabe-/Steuereinheit (20) übermittelt.

2. Feldgerät (1) nach Anspruch 1,
**dadurch gekennzeichnet,**
**dass** das Feldgerät der Füllstandsmessung dient.

3. Feldgerät (1) nach Anspruch 1,
**dadurch gekennzeichnet,**
**dass** die Feldbuskommunikationseinheit (15) mit dem Messwert auch den Messzeitpunkt (t_{M}) kommuniziert.

4. Feldgerät (1) nach Anspruch 1,
**dadurch gekennzeichnet,**
**dass** die Ausgabe-/Steuereinheit (20) mindestens zwei zeitliche Abstände (A₁, A₂) zwischen jeweils mindestens zwei vorhergehenden Kommunikationszeitpunkten (t_{K1}, t'_{K1}, t_{K2}, t'_{K2}) berechnet,
**dass** die Ausgabe-/Steuereinheit (20) aus den zeitlichen Abständen (A₁, A₂) einen Mittelwert (M) bildet,
und **dass** die Ausgabe-/Steuereinheit (20) den folgenden Kommunikationszeitpunkt (t_{f}) ausgehend von dem Mittelwert (M) und einem vorhergehenden Kommunikationszeitpunkt (t"_{K}) bestimmt.

5. Feldgerät (1) nach Anspruch 1 oder 4,
**dadurch gekennzeichnet,**
**dass** in dem Fall, dass der zeitliche Abstand (A_{b}) bis zum bestimmten Kommunikationszeitpunkt (t_{f}) kleiner ist als ein Kleinstwert (K),
die Ausgabe-/Steuereinheit (20) den Kommunikationszeitpunkt (t_{f}) ausgehend von diesem Kleinstwert (K) bestimmt,
wobei der Kleinstwert (K) aus dem minimalen zeitlichen Abstand (Aₘᵢₙ) bestimmt ist, der aufgrund technischer Gegebenheiten zwischen zwei aufeinander folgenden Messungen möglich ist.

6. Feldgerät (1) nach Anspruch 1 oder 4,
**dadurch gekennzeichnet,**
**dass** in dem Fall, dass der zeitliche Abstand (A_{b}) bis zum bestimmten Kommunikationszeitpunkt (t_{f}) größer ist als ein Grenzwert (G),
die Ausgabe-/Steuereinheit (20) den Kommunikationszeitpunkt (t_{f}) ausgehend von dem zeitlichen Abstand (A'_{b}) bestimmt, der für die Bestimmung des vorhergehenden bestimmten Kommunikationszeitpunktes (t'_{f}) verwendet wurde,
wobei der Grenzwert (G) eine Grenze zwischen einem zeitlichen Abstand zwischen Anfragen in einem normalen Kommunikationszyklus und einem zeitlichen Abstand in einem gestörten Kommunikationszyklus der Steuereinheit (10) darstellt.

## Claims

1. Field device (1) of process automation technology, which at a measurement point in time (t_{M}) produces a measured value,
**characterised**
**in that** at least one field bus communication unit (15) is provided,
which, upon a request from a central control unit (10), communicates at least the measured value at a communication point in time (t_{K}) as a response to the request,
the points in time of the requests being determined by the central control unit (10),
and
**in that** at least one output/control unit (20) is provided,
which, from at least one time interval (A) between at least two preceding communication points in time (t_{K}, t'_{K}) and one preceding communication point in time (t"_{K}), determines in advance the following communication point in time (t_{f}), at which the field bus communication unit (15) communicates the measured value to be produced as a response to the next request coming from the central control unit (10),
which determines a measuring point in time (t_{M}) for producing the measured value on the basis of the determined following communication point in time (t_{f}), and
which controls the measuring point in time (t_{M}) of the field device (1),
the field bus communication unit (15) transmitting to the output/control unit (20) at least the communication point in time (t_{K}) at which the field bus communication unit (15) actually communicates the measured value following the request from the central control unit (10).

2. Field device (1) according to Claim 1,
**characterised**
**in that** the field device serves for fill level measurement.

3. Field device (1) according to Claim 1,
**characterised**
**in that** the field bus communication unit (15), along with the measured value, also communicates the measurement point in time (t_{M}).

4. Field device (1) according to Claim 1,
**characterised**
**in that** the output/control unit (20) calculates at least two time intervals (A₁, A₂) between, in each case, at least two preceding communication points in time (t_{K1}, t'_{K1}, t_{K2}, t'_{K2}),
**in that** the output/control unit (20) forms an average value (M) from the time intervals (A₁, A₂),
and **in that** the output/control unit (20) determines the following communication point in time (t_{f}) starting from the average value (M) and from a preceding communication point in time (t"_{K}).

5. Field device (1) according to Claim 1 or 4,
**characterised**
**in that**, in the case where the time interval (A_{b}) to the determined communication point in time (t_{f}) is less than a minimum value (K), the output/control unit (20) determines the communication point in time (t_{f}) starting from this minimum value (K),
the minimum value (K) being determined from the minimum time interval (Aₘᵢₙ) which is possible between two successive measurements, on account of technical constraints.

6. Field device (1) according to Claim 1 or 4,
**characterised**
**in that**, in the case where the time interval (A_{b}) to the determined communication point in time (t_{f}) is greater than a limit value (G), the output/control unit (20) determines the communication point in time (t_{f}) starting from the time interval (A'_{b}) which was used for the determination of the preceding determined communication point in time (t'_{f}),
the limit value (G) representing a boundary between a time interval between requests in a normal communication cycle and a time interval in a disturbed communication cycle of the control unit (10).

## Revendications

1. Appareil de terrain (1) de la technique d'automatisation des process,
qui génère une valeur mesurée à un instant de mesure (t_{M}),
**caractérisé en ce**
**qu'**est prévue au moins une unité de communication de bus de terrain (15), qui communique, lors d'une demande émanant d'une unité de commande centrale (10), au moins une valeur mesurée à un instant de communication (t_{K}) en tant que réponse à la demande,
les instants des demandes provenant de l'unité de commande centrale (10) étant déterminés,
et
**qu'**est prévue au moins une unité d'affichage / de commande (20), laquelle détermine à l'avance à partir d'au moins un intervalle de temps (A) entre au moins deux instants de communication (t_{K}, t'_{K}) précédents et un instant de communication (t"_{K}) l'instant de communication (t_{f}), auquel l'unité de communication de bus de terrain (15) communique la valeur mesurée générée en tant que réponse à la prochaine demande provenant de l'unité de commande centrale (10),
laquelle détermine, sur la base de l'instant de communication (t_{f}) suivant déterminé, un instant de mesure (t_{M}) pour la génération de la valeur mesurée, et
laquelle commande l'instant de mesure (t_{M}) de l'appareil de terrain (1),
l'unité de communication de bus de terrain (15) transmettant à l'unité d'affichage / de commande (20) au moins l'instant de communication (t_{K}), auquel l'unité de communication de bus de terrain (15) communique réellement la valeur mesurée après la demande provenant de l'unité de commande centrale (10).

2. Appareil de terrain (1) selon la revendication 1,
**caractérisé en ce**
**que** l'appareil de terrain sert à la mesure de niveau.

3. Appareil de terrain (1) selon la revendication 1,
**caractérisé en ce**
**que** l'unité de communication de bus de terrain (15) communique, outre la valeur mesurée, également l'instant de mesure (t_{M}).

4. Appareil de terrain (1) selon la revendication 1,
**caractérisé en ce**
**que** l'unité d'affichage / de commande (20) calcule au moins deux intervalles de temps (A₁, A₂), entre à chaque fois deux instants de communication (t_{K1}, t'_{K1}, t_{K2}, t'_{K2}) précédents,
**que** l'unité d'affichage / de commande (20) détermine une valeur moyenne (M) à partir des intervalles de temps (A₁, A₂),
et en ce que l'unité d'affichage / de commande (20) détermine l'instant de communication (t_{f}) suivant à partir de la valeur moyenne (M) et d'un instant de communication (t"_{K}) précédent.

5. Appareil de terrain (1) selon la revendication 1 ou 4,
**caractérisé en ce**
**que** dans le cas, où l'intervalle de temps (A_{b}) jusqu'à l'instant de communication (t_{f}) déterminé est inférieur à une valeur minimale (K), l'unité d'affichage / de commande (20) détermine l'instant de communication (t_{f}) à partir de la valeur minimale (K),
la valeur minimale (K) étant déterminée à partir de l'intervalle de temps (Aₘᵢₙ) minimal, qui est possible entre deux mesures consécutives sur la base des caractéristiques techniques.

6. Appareil de terrain (1) selon la revendication 1 ou 4,
**caractérisé en ce**
**que** dans le cas, où l'intervalle de temps (A_{b}) jusqu'à l'instant de communication (t_{f}) déterminé est supérieur à une valeur limite (G), l'unité d'affchage / de commande (20) détermine l'instant de communication (t_{f}) à partir de l'intervalle de temps (A'b), qui a été utilisé pour la détermination de l'instant de communication (t'_{f}) précédemment déterminé,
la valeur limite (G) constituant une limite entre un intervalle de temps entre les demandes émises au sein d'un cycle de communication normal et un intervalle de temps au sein d'un cycle de communication perturbé de l'unité de commande (10).
